# FASCICULE DE BREVET EUROPEEN

(11) **EP 0 846 143 B1**
(45) Date de publication et mention de la délivrance du brevet: **16.06.1999**
(21) Numéro de dépôt: 96927733.4
(22) Date de dépôt: 02.08.1996
(51) Int. Cl.: C08K 13/02, C08J 3/22

(54) **ADDITIF ECAILLE ANTISTATIQUE ET ANTIACIDE POUR POLYMERES**
SCHUPPENFÖRMIGES ANTISTATISCHES UND ANTIACIDISCHES ADDITIV FÜR POLYMERE
ANTI-STATIC AND ANTI-ACID SCALED ADDITIVE FOR POLYMERS

(30) Priorité: 19.03.1996 FR 9603398; 26.04.1996 FR 9605310
(43) Date de publication de la demande: 10.06.1998
(73) Titulaire: CECA S.A., 92800 Puteaux (FR)
(72) Inventeur: CARRIERE MONTJOSIEU, Charles, F-92370 Chaville (FR); BOUCHET, Eric, F-62223 Saint-Laurent-Blangy (FR); VASSEUR, Daniel, F-62217 Beaurains (FR)
(74) Mandataire: Haicour, Philippe
(86) Numéro de dépôt international: FR9601234
(87) Numéro de publication internationale: WO9734949

(56) Documents cités:
- EP-A- 0 213 788
- US-A- 3 266 924
- US-A- 4 417 999
- US-A- 4 764 428

## Description

### DOMAINE TECHNIQUE

La présente invention se rapporte aux ingrédients de formulation des compositions de polymères pour moulage ou extrusion, destinés à leur conférer des propriétés antistatiques et anti-acide.

### TECHNIQUE ANTERIEURE

L'industrie a depuis longtemps consacré pour leur fonction antistatique les N,N-bis(hydroxyéthyl)-N-alkylamines, et préférentiellement les dérivés alkyl en C16-C20, en particulier la N,N-bis(hydroxyéthyl)-N-stéarylamine ou les dérivés industriels correspondants à chaîne suif ou suif hydrogéné. De même, la fonction anti-acide, qui assure la stabilité à la chaleur et à la lumière des polymères chlorés ou des polymères non chlorés, mais qui nécessitent pour leur polymérisation des catalyseurs halogénés du type Ziegler, a été largement dévolue à l'oxyde de magnésium (magnésie MgO) et au au carbonate basique de magnésium et d'aluminium, l'hydrotalcite, RN = 12304-65-3, MgCO₃.5Mg(OH)₂.2Al(OH)₃.4H₂O, (ci-après HTal), substances dont les propriétés anti-acides sont bien connues et exploitées dans divers domaines, pharmaceutique par exemple. Il était donc souhaitable d'associer ces deux types de composants au sein d'une même formulation d'additif écaillé. Ce faisant, on se heurte à des difficultés de deux ordres. Les premières tiennent à la difficulté d'écailler sur les bancs d'écaillage, les deuxièmes à l'aspect et au comportement des écailles produites.

Les additifs en question sont destinés à la réalisation de mélanges-maîtres additif/polymères. Leur présentation en écailles est très prisée. Ces écailles doivent évidemment être fusibles et stables aux températures de fabrication de ces mélanges-maîtres, ce qui ne constitue guère un problème. Il faut aussi qu'elles ne produisent pas de poussières à la manipulation et qu'elles ne s'agglomèrent pas lors d'un stockage quelque peu prolongé. Ce sont là des propriétés qui sont plus ou moins en liaison avec les caractéristiques requises du produit pour un écaillage correct. Les compositions simples amines oxyéthylénées / magnésie et/ou hydrotalcite ne répondent pas à ces impératifs. La présente invention remédie à ces inconvénients.

On rappelle ici rapidement ce qu'est un banc d'écaillage. Le dispositif est essentiellement constitué d'un rouleau écailleur au contact immédiat d'un rouleau encreur de plus faible diamètre qui baigne dans une auge où le produit à écailler est maintenu fondu, dans le cas des additifs selon l'invention, vers 80°C. L'encreur tourne en sens inverse de l'écailleur et y dépose une couche mince et uniforme du produit. L'écailleur est maintenu à une température inférieure de 15 à 20°C à la température de solidification du produit à écailler. Une pellicule solidifiée s'y forme, qui est détachée par un racleur. Les débris sont envoyée dans un système de broyage-émottage, d'où sortent les écailles alors dirigées vers l'atelier de conditionnement.

Parmi les incidents d'écaillage les plus fréquents, on relève les suivants.
- Décantation dans l'auge. Il y a séparation physique des constituants de la formulation de l'additif et la composition des écailles n'est plus homogène. Le phénomène s'amplifie avec le temps de fonctionnement, et peut aboutir à l'arrêt de l'écaillage.
- Film d'écaillage collant. Le mélange reste homogène, mais le film formé sur l'écailleur est ductile et/ou collant. Le raclage devient défectueux ou impossible. Les écailles, si elles se forment néanmoins ont une tendance prononcée au mottage.
- Formation de fines. Causes multiples. Par exemple, film trop fin formé à partir d'une composition trop fluide, raclé en plaques et broyé en trop fines particules. Produit final incorrect, avec tendance au mottage, et surtout insalubrité inacceptable de l'atelier.

La composition écaillable doit donc avoir une température de fusion, qui pour les raisons d'écaillage, et aussi d'utilisation, doit se situer entre 40 et 80°C. En pratique, on fixe la température minimum de fusion à 44°C. Il faut donc compenser la basse température de fusion de l'amine éthoxylée, (39°C pour la plus dure, l'amine éthoxylée de suif hydrogéné), ce qu'on fait par addition d'une charge minérale. On a constaté, et une partie de l'invention exploite ce constat, que l'on ne pouvait pas durcir à volonté par accroissement du taux de charge. Au delà d'un certain taux, le mélange fondu n'est plus homogène et décante dans l'auge où baigne l'encreur. L'écaille n'a plus de composition homogène; elle est formée d'îlots de matière cirée d'un excès d'amine éthoxylée et redevient collante. Il y a ainsi une limite pratique au taux de charge, qu'on situe vers 15% en poids. Dans les additifs de l'invention, ce rôle de charge, au demeurant active vis-à-vis de l'acide chlorhydrique, est dévolu à l'oxyde de magnésium ou à l'hydrotalcite. Il se trouve que ces substances sont à ce point de vue, des produits particulièrement difficiles à metre en oeuvre, et il convient, pour assurer l'homogénéité de la formulation qui les contient d'y inclure un stabilisant, qui évidemment doit être compatible avec les polymères qui exigent l'additif pour la constitution des mélanges maîtres moulables ou extrudables. On utilise à cet effet le stéarate de calcium. On est ici encore limité en taux supérieur : au delà de 25% de stéarate, l'écaille redevient collante.

### REALISATION DE L'INVENTION

Les compositions selon l'invention sont ainsi des compositions écaillées renfermant
- de 5 à 15% d'oxyde de magnésium et/ou d'hydrotalcite
- de 10 à 25% de stéarate de calcium
- le complément à 100% de N,N-bis(hydroxyéthyl)-N-stéarylamine ou de son équivalent industriel N,N-bis(hydroxyéthyl)-N-(suif hydrogéné)amine.

Différentes variantes de la formulation font également partie de l'invention : celles qui résultent du remplacement de tout ou partie du stéarate de calcium par le stéarate de zinc ou le stéarate de magnésium ; celles qui résultent du remplacement jusqu'à 50% de la magnésie MgO ou de l'hydrotalcite par une autre charge minérale, par exemple par de l'alumine, de préférence calcinée-broyée, ou par du dioxyde de titane (TiO2), qui apporte à la formulation une fonction de pigment, ou encore par du sulfate de baryum (BaSO4) pour en augmenter la densité. Dans les formulations d'additifs pour polymère, il est courant d'utiliser de l'éthylène bis-stéaramide (EBS). Bien qu'il s'agisse d'un constituant organique, mais parce que son point de fusion est très élevé (F ≈ 140°C), ce composant peut être intégré à la formule de base en remplacement jusqu'à 50% de l'oxyde MgO ou de l'hydrotalcite.

### EXEMPLES

Les exemples suivants illustreront l'invention. On y a utilisé comme N,N-bis(hydroxyéthyl)-N-(suif hydrogéné)amine, le Noramox®SH2 de CECA S.A., ci-après NoxSH2. Le stéarate de calcium y a été symbolisé par CaSt. Les compositions sont données en poids pour-cent.

### Exemple 1 : formule de base.

On a comparé une formule de base selon l'invention comportant la N,N-bis(hydroxyéthyl)-N-(suif hydrogéné)amine, le stéarate de calcium et l'hydrotalcite (F1) ou la magnésie MgO (F2), des variantes par remplacement partiel de l'hydrotalcite par du dioxyde de titane ou de l'éthylène bis-stéaramide (F3, F4), et les contre formules correspondantes dans lesquelles manque le stéarate de calcium. Ces compositions sont explicitées dans le tableau ci-dessous.

| Composition | F1 | F2 | F3 | F4 | F'1 | F'2 | F'3 | F'4 |
|---|---|---|---|---|---|---|---|---|
| NoxSH2 | 65 | 65 | 65 | 65 | 87 | 87 | 87 | 87 |
| CaSt | 22 | 22 | 22 | 22 | | | | |
| HTal | 13 | | 7 | 7 | 13 | | 7 | 7 |
| MgO | | 13 | | | | 13 | | |
| TiO2 | | | 6 | | | | 6 | |
| EBS | | | | 6 | | | | 6 |

Les compositions F1, F2, F3, F4 sont des écailles cassantes, sans fines, non collantes, fusibles vers 45°C (bien que la lecture de la fusion soit difficile à faire au bloc Maquenne, le produit fondu retenant, en l'absence de toute perturbation mécanique, la forme de l'écaille initiale). Les formules F'1, F'2, F'3, F'4 sont des écailles fondant aussi vers 45°C, mais d'apparence hétérogène, ductiles, voire d'aspect caoutchouteux, collantes entre elles. On met bien en évidence la présence nécessaire du stabilisant stéarate.

### Exemple 2

Formules alourdies par du sulfate de baryum.

| Composition | F5 | F'5 | F"5 |
|---|---|---|---|
| NoxSH2 | 65 | 87 | 60 |
| CaSt | 22 | | 20 |
| HTal | 7 | 7 | 10 |
| BaSO4 | 6 | 6 | 10 |

La composition F5 selon l'invention se présente sous forme d'écailles cassantes, sans fines. La composition sans stéarate F'5 est impossible à maintenir homogène à l'état fondu dans l'auge du dispositif d'écaillage. Le sulfate de baryum décante et l'écaille résultante est hétérogène, collante et mottante. La formule F"5, trop riche en charges minérales est impossible à écailler.

## Revendications

1. Composition écaillée d'additif antistatique et antiacide pour polymère renfermant en poids,
- de 5 à 15% de magnésie MgO ou d'hydrotalcite,
- de 10 à 25% de stéarate de calcium,
- le complément à 100% de N,N-bis(hydroxyéthyl)-N-stéarylamine ou de son équivalent industriel N,N-bis(hydroxyéthyl)-N-(suif hydrogéné)amine.

2. Composition selon la revendication 1, dans laquelle on a remplacé tout ou partie du stéarate de calcium par du stéarate de zinc ou du stéarate de magnésium.

3. Composition selon la revendication 1, dans laquelle jusqu'à 50% de la magnésie ou de l'hydrotalcite ont été remplacés par du dioxyde de titane.

4. Composition selon la revendication 1, dans laquelle jusqu'à 50% de la magnésie ou de l'hydrotalcite ont été remplacés par de l'éthylène bis-stéaramide.

5. Composition selon la revendication 1, dans laquelle jusqu'à 50% de la magnésie ou de l'hydrotalcite ont été remplacés par de l'alumine.

6. Composition selon la revendication 1, dans laquelle jusqu'à 50% de la magnésie ou de l'hydrotalcite ont été remplacés par du sulfate de baryum.

## Patentansprüche

1. Geschuppte (schuppenförmige) Zusammensetzung aus antistatischem und antiacidem Additiv für Polymere, enthaltend gewichtsbezogen
- 5 bis 15 % Magnesiumoxid MgO oder Hydrotalcit,
- 10 bis 25 % Calciumstearat,
- vervollständigt auf 100 % durch N,N-Bis(hydroxyethyl)-N-stearylamin oder sein industrielles Äquivalent N,N-Bis(hydroxyethyl)-N-(hydriertertalg)amin.

2. Zusammensetzung nach Anspruch 1, bei der man das Calciumstearat ganz oder teilweise durch Zinkstearat oder Magnesiumstearat ersetzt hat.

3. Zusammensetzung nach Anspruch 1, bei der bis zu 50 % des Magnesium-oxids oder des Hydrotalcits durch Titandioxid ersetzt worden sind.

4. Zusammensetzung nach Anspruch 1, bei der bis zu 50 % des Magnesium-oxids oder des Hydrotalcits durch Ethylenbisstearamid ersetzt worden sind.

5. Zusammensetzung nach Anspruch 1, bei der bis zu 50 % des Magnesium-oxids oder des Hydrotalcits durch Aluminiumoxid ersetzt worden sind.

6. Zusammensetzung nach Anspruch 1, bei der bis zu 50 % des Magnesium-oxids oder des Hydrotalcits durch Bariumsulfat ersetzt worden sind.

## Claims

1. Flaked composition of antistatic and antiacid additive for polymers containing the following, by weight
- 5 to 15% of magnesia MgO or hydrotalcite,
- 10 to 25% of calcium stearate,
- N,N-bis (hydroxyethyl)-N-stearylamine or its industrial equivalent, N,N-bis (hydroxyethyl)-N-(hydrogenated tallow) amine to 100%.

2. Composition according to claim 1, in which all or part of the calcium stearate was replaced by zinc stearate or magnesium stearate.

3. Composition according to claim 1, in which up to 50% of the magnesia or hydrotalcite was replaced by titanium dioxide.

4. Composition according to claim 1, in which up to 50% of the magnesia or hydrotalcite was replaced by ethylene bisstearamide.

5. Composition according to claim 1, in which up to 50% of the magnesia or hydrotalcite was replaced by alumina.

6. Composition according to claim 1, in which up to 50% of the magnesia or hydrotalcite was replaced by barium sulphate.
